# EUROPÄISCHE PATENTANMELDUNG

(11) **EP 3 693 229 A1**
(43) Veröffentlichungstag der Anmeldung: **12.08.2020**
(21) Anmeldenummer: 20153972.3
(22) Anmeldetag: 28.01.2020
(51) Int. Cl.: B60R 16/023

(54) **KRAFTFAHRZEUGENERGIELEITERANSCHLUSS UND KRAFTFAHRZEUGENERGIELEITER**

(30) Priorität: 05.02.2019 DE 102019102793
(71) Anmelder: Auto-Kabel Management GmbH, 79688 Hausen i.W. (DE)
(72) Erfinder: Cacciatore, David, 47804 Krefeld (DE); Tazarine, Dipl.-Ing. Wacim, 41812 Erkelenz (DE); Schloms, Dipl.-Ing. Martin, 52070 Aachen (DE)
(74) Vertreter: Cohausz & Florack

(57) **Zusammenfassung**

Kraftfahrzeugenergieleiteranschluss umfassend ein erstes mit einem Kraftfahrzeugenergieleiter einphasig mechanisch koppelbares Kontaktelement, ein mit einem Kommunikationsbus koppelbares Anschlusselement und eine zwischen dem Anschlusselement und dem Kontaktelement angeordnete Kommunikationseinrichtung zur Übertragung von Signalen zwischen dem Kontaktelement und dem Anschlusselement.

## Beschreibung

Der Gegenstand betrifft einen Kraftfahrzeugenergieleiteranschluss sowie einen Kraftfahrzeugenergieleiter.

In Verdrahtungskonzepten in automotiven Anwendungen erfolgt bisher eine strikte Trennung zwischen der Energieverteilung zwischen einem Energiespeicher und Verbrauchern einerseits und einer Kommunikation zwischen Steuergeräten und Verbrauchern andererseits. Für jede dieser beiden Anwendungen wird ein dezidierter Kabelstrang zur Verfügung gestellt.

Verbraucher sind jedoch stets über eine Kraftfahrzeugenergieleitung mit der Batterie verbunden. Auch Antriebsbatterien werden mit Antriebsmotoren verbunden. Diese bestehende Verkabelung innerhalb des Fahrzeugs wird jedoch bisher nicht für die Kommunikationsübertragung genutzt.

Dem Gegenstand liegt die Aufgabe zugrunde, einen Kraftfahrzeugenergieleiter als Kommunikationsmedium einzusetzen.

Diese Aufgabe wird durch einen Kraftfahrzeugenergieleiteranschluss nach Anspruch 1 sowie einen Kraftfahrzeugenergieleiter nach Anspruch 8 gelöst.

Kommunikation über Energieleiter an sich ist bekannt. Die sogenannte "Powerline-Communication (PLC)" ist in stationären Anwendungen bekannt. In automotiven Anwendungen erfolgt die Kommunikation jedoch getrennt von dem Energieleiter. Mit Hilfe des gegenständlichen Anschlusses ist es möglich, Nutzsignale in einen Energieleiter ein und aus zu koppeln.

Kraftfahrzeugenergieleiter können beispielsweise Batteriekabel, Busbars, Energy-Backbones®, Starter-Generator-Kabel, Starter-Batterie-Kabel, Generator-Batterie-Kabel, Anschlusskabel für elektrische Verbraucher oder dergleichen sein. Über ein Kraftfahrzeugenergiekabel wird elektrische Energie zum Betrieb eines Verbrauchers von einem Energiespeicher zu dem Verbraucher übertragen. Klassische Kraftfahrzeugenergieleitungen haben eine Stromtragfähigkeit von mehreren 10A bis mehrere 100A. Solche Kraftfahrzeugenergieleiter sind in der Regel mit einer Seele aus Vollmaterial oder als Litzenleitung und einer die Seele umgebenden Isolation gebildet. Kabelquerschnitte von über 25mm², bis hin zu 150mm² und mehr sind kennzeichnend für Kraftfahrzeugenergieleitungen.

Erfindungsgemäß ist es möglich, in solche für die Energieübertragung eingesetzte Leitungen, Nutzsignale, insbesondere Kommunikationssignale, einzukoppeln.

Kraftfahrzeugenergiekabel zeichnen sich dadurch aus, dass sie in der Regel einphasig bzw. einpolig sind. Einphasig in diesem Zusammenhang bedeutet, dass nur ein Potenzial auf dem Leiter übertragen wird. In automotiven Anwendungen ist in der Regel eine Gleichstromübertragung vorgesehen, wobei ein Batteriepluspol mit dem Kraftfahrzeugenergieleiter verbunden ist und ein Batterieminuspol mit einem zweiten Kraftfahrzeugenergieleiter oder der Fahrzeugkarosse. In automotiven Anwendungen mit elektrifiziertem Antriebsstrang kommt es auch vor, dass ein Kraftfahrzeugenergieleiter sowohl Plus- und Minuspol führt, wobei jeder dieser Energieleiter als einphasig im Sinne dieser Anmeldung verstanden werden kann.

Ein gegenständlicher Anschluss verfügt über ein Kontaktelement, welches mit nur einem Kontakt an den Kraftfahrzeugenergieleiter koppelbar ist. Das bedeutet, dass nur ein Bezugspotenzial zwischen dem Kraftfahrzeugenergieleiter und dem Kontaktelement kurzgeschlossen wird. Es ist somit kein mehradriger Anschluss notwendig, sondern das Kontaktelement bildet einen einadrigen Anschluss zwischen dem Kraftfahrzeugenergieleiteranschluss und dem Kraftfahrzeugenergieleiter.

Der Kraftfahrzeugenergieleiteranschluss verfügt darüber hinaus über ein Anschlusselement, welches mit zumindest einem Kommunikationsbus koppelbar ist. Ein Kommunikationsbus ist in der Regel ein serieller, mehrphasiger Kommunikationsbus, beispielsweise ein CAN-Bus, ein LIN-Bus, ein FlexRay-Bus oder ein fahrzeuginternes Ethernet. Diese Kommunikationstechnologien benötigen in der Regel mehradrige Leitungen, beispielsweise als verdrillte Zweidrahtleitung oder Mehrdrahtleitung und einen Stecker. Bisher wurden derartige Kommunikationstechnologien auf hierfür dezidiert vorgesehenen Kabelsträngen betrieben, was es notwendig machte, das Steuergeräte und anzusprechende Verbraucher über eine Leitungen miteinander verbunden werden mussten, um die Kommunikation zwischen diesen beiden Kommunikationsteilnehmern zu gewährleisten.

Mit Hilfe des gegenständlichen Kraftfahrzeugenergieleiteranschlusses ist es möglich, Nachrichten auf dem Kommunikationsbus zwischen einem Sender und einem Empfänger über den Kraftfahrzeugenergieleiter zu übertragen.

Hierzu ist eine Kommunikationseinrichtung vorgesehen. Die Kommunikationseinrichtung ist elektrisch und logisch zwischen dem Anschlusselement und dem Kontaktelement angeordnet. Signale auf dem Kommunikationsbus werden über das Anschlusselement in der Kommunikationseinrichtung empfangen und gewandelt, sodass sie über das Kontaktelement auf den Kraftfahrzeugenergieleiter einkoppelbar sind. Signale auf dem Kraftfahrzeugenergieleiter werden von dem Kontaktelement abgegriffen und durch die Kommunikationseinrichtung erfasst und demoduliert, sodass sie anschließend in dem geeigneten Protokoll an dem Anschlusselement ausgegeben werden können.

Das Anschlusselement kann als Buchse oder sonstiger Anschluss gebildet sein und eine entsprechende Anzahl an Anschlusspins aufweisen, die das jeweilige Kommunikationsprotokoll benötigt. Auch ist es möglich, dass das Anschlusselement verschiedene Kommunikationsprotokolle und Busse unterschützt und für jeden dieser Busse ein eigenes Anschlussfeld aufweist. So können mehrere Buchsen vorgesehen sein, die bedarfsweise belegt werden können. Die Buchsen sind jeweils mit der Kommunikationseinrichtung verbunden, welche eine jeweilige Protokollumsetzung zwischen dem Bus-Protokoll und dem Kommunikationsprotokoll auf dem Kraftfahrzeugenergieleiter und umgekehrt durchführt.

Mit Hilfe der Kommunikationseinrichtung ist es möglich an dem Anschlusselement anliegende Signale auf das Kontaktelement zu übertragen und Signale, die an dem Kontaktelement anliegen, auf das Anschlusselement.

Gemäß einem Ausführungsbeispiel wird vorgeschlagen, dass die Kommunikationseinrichtung Signale in das Kontaktelement einkoppelt. Das Kontaktelement wird mit dem Energieleiter gekoppelt. Über diese elektrische Kopplung lassen sich Signale in den Energieleiter einkoppeln. Dabei erfolgt insbesondere eine Modulation eines Nutzsignals auf ein Trägersignal. Verschiedenste Modulationsverfahren sind bekannt, welche sich für die Übertragung von Nutzsignalen auf dem Energieleiter eignen. Beispiele sind QAM oder PSK, mit denen Nutzsignale über ein Trägersignal moduliert werden können. Ein Nutzsignal wird an dem Anschlusselement über den Kommunikationsbus empfangen und von der Kommunikationseinrichtung ausgewertet. Anschließend wird das Nutzsignal von der Kommunikationseinrichtung auf das Trägersignal aufmoduliert und an dem Kontaktelement in den Kraftfahrzeugenergieleiter eingekoppelt.

Umgekehrt ist es auch möglich, dass die Kommunikationseinrichtung Signale mit dem Kontaktelement aus dem Energieleiter auskoppelt. In Empfangsrichtung ist die Kommunikationseinrichtung dazu eingerichtet, ein auf ein Trägersignal aufmoduliertes Nutzsignal zu demodulieren und in entsprechende Signale eines Kommunikationsbusses umzusetzen und an dem Anschlusselement auszugeben.

Gemäß einem Ausführungsbeispiel wird vorgeschlagen, dass die Kommunikationseinrichtung einen Anschluss für ein Massepotenzial aufweist und dass das Massepotenzial ein Referenzpotenzial für das Signal bildet. Wie bereits oben erläutert, ist der Kraftfahrzeugenergieleiteranschluss über das Kontaktelement nur einphasig mit dem Kraftfahrzeugenergieleiter verbunden. Dieser einphasige (einpolige) Anschluss des Kraftfahrzeugenergieleiteranschlusses an den Kraftfahrzeugenergieleiter erfordert, dass das aufmodulierte Signal gegenüber einem Referenzpotenzial messbar ist. Daher wird vorgeschlagen, dass das Referenzpotenzial das Massepotenzial des Fahrzeugs ist. Dieses Massepotenzial kann an der Fahrzeugkarosse abgegriffen werden. Hierzu kann ein eigener Anschlusspol vorgesehen sein, über den das Massepotenzial der Kommunikationseinrichtung zugeführt wird, sodass diese eine entsprechende Modulation und Demodulation durchführen kann. Auch kann ein mechanischer Anschluss an eine Kraftfahrzeugkarosse dazu genutzt werden, das Massepotenzial abzugreifen.

Gemäß einem Ausführungsbeispiel wird vorgeschlagen, dass das Kontaktelement als Klemmanschluss gebildet ist. Ein Klemmanschluss kann beispielsweise in der Form einer Bolzenklemme, beispielsweise in der Form einer Batteriepolklemme gebildet sein. Ein Klemmanschluss kann aus zwei Klemmbacken mit einer zwischen den Klemmbacken gebildeten Öffnung gebildet sein. Die Klemmbacken lassen sich auf einander zu bewegen, wodurch die zwischen den Klemmbacken gebildete Öffnung verkleinert wird und das Kontaktelement an einem Bolzen oder Flachleiter verklemmen kann. Der Klemmanschluss weist insbesondere, zumindest in Teilen, eine runde Öffnung für einen Anschlussbolzen auf. Somit kann in einer sehr einfachen Art und Weise ein einphasiger (einpoliger) Anschluss des Kraftfahrzeugenergieleiteranschlusses an einen Kraftfahrzeugenergieleiter gebildet werden.

Gemäß einem Ausführungsbeispiel wird vorgeschlagen, dass das Kontaktelement als Kabelklemme gebildet ist. Der Kraftfahrzeugenergieleiter kann bevorzugt als Flachleiter mit einem rechteckigen Querschnittsprofil gebildet sein. Auf einen solchen Flachleiter kann ein U-förmiges Klemmelement aufgesteckt werden, wodurch ein mechanischer und elektrischer Kontakt zwischen dem Kontaktelement und dem Leiter gebildet wird. Daher weist die Kabelklemme einen U-förmigen Klemmbereich auf. In diesen U-förmigen Klemmbereich kann das Flachkabel eingeschoben werden, sodass ein mechanischer und elektrischer Kontakt hergestellt ist.

Gemäß einem Ausführungsbeispiel wird vorgeschlagen, dass die Kommunikationseinrichtung zumindest in Teilen auf einer Leiterplatte gebildet ist und dass die Leiterplatte zusammen mit dem Kontaktelement und dem Anschlusselement in einem Gehäuse eingehaust ist. Die Kommunikationseinrichtung ist insbesondere in Form eines Microchips (µC) geformt und innerhalb eines Gehäuses, vorzugsweise vollständig vergossen angeordnet. Die Kommunikationseinrichtung lässt sich frei programmieren, um die gewünschte Protokollumsetzung und Modulation zu gewährleisten.

Gemäß einem Ausführungsbeispiel wird vorgeschlagen, dass an dem Gehäuse ein Befestigungsmittel für eine Kraftfahrzeugkarosse angeordnet ist. Über diese Befestigungsmittel, beispielsweise eine Steckverbindung, eine Schraubverbindung, eine Clipverbindung oder dergleichen, kann das Gehäuse kraftschlüssig mit der Kraftfahrzeugkarosse verbunden werden. Um ein Massepotenzial abgreifen zu können, kann das Befestigungsmittel leitend mit der Kommunikationseinrichtung verbunden sein. Somit wird über das Befestigungsmittel unmittelbar das Referenzpotenzial an der Kraftfahrzeugkarosse abgegriffen und der Kommunikationseinrichtung zur Verfügung gestellt.

Ein Kraftfahrzeugenergieleiter mit einem Kraftfahrzeugenergieleiteranschluss wie zuvor beschrieben, ist ebenfalls ein Aspekt der Anmeldung.

Bei einem solchen Kraftfahrzeugenergieleiter kann ein Kraftfahrzeugenergieleiteranschluss zwischen den distalen Enden des Kraftfahrzeugenergieleiters angeordnet sein. Insbesondere im Bereich eines Mittenabgriffes kann ein solcher Kraftfahrzeugenergieleiteranschluss angeordnet sein. Bei einem Mittenabgriff ist beidseitig des Kraftfahrzeugenergieleiteranschlusses der Kraftfahrzeugenergieleiter zumindest isoliert und im Bereich des Anschlusses ist die Isolation aufgebrochen. Die Isolation kann am Abgriff umlaufend entfernt sein und der Kraftfahrzeugenergieleiteranschluss kann als Klemmteil auf den Kraftfahrzeugenergieleiter aufgeklemmt sein. Auch ist es möglich, dass ein metallischer Bolzen aus der Isolation heraus geführt wird, welcher über den Klemmanschluss abgegriffen wird.

Gemäß einem Ausführungsbeispiel wird vorgeschlagen, dass der Kraftfahrzeugenergieleiteranschluss zumindest mit einem aus der Isolation des Kraftfahrzeugenergieleiters herausgeführten Anschlussbolzen verbunden ist.

Auch wird vorgeschlagen, dass die Isolation entfernt ist und dass der Kraftfahrzeugenergieleiteranschluss klemmend in dem Anschlussbereich mit dem Kraftfahrzeugenergieleiter verbunden ist.

Nachfolgend wird der Gegenstand anhand einer Ausführungsbeispiele zeigenden Zeichnung näher erläutert. In der Zeichnung zeigen:
- Fig. 1: ein erstes Ausführungsbeispiel eines Kraftfahrzeugenergieleiteranschlusses;
- Fig. 2: ein zweites Ausführungsbeispiel eines Kraftfahrzeugenergieleiteranschlusses.

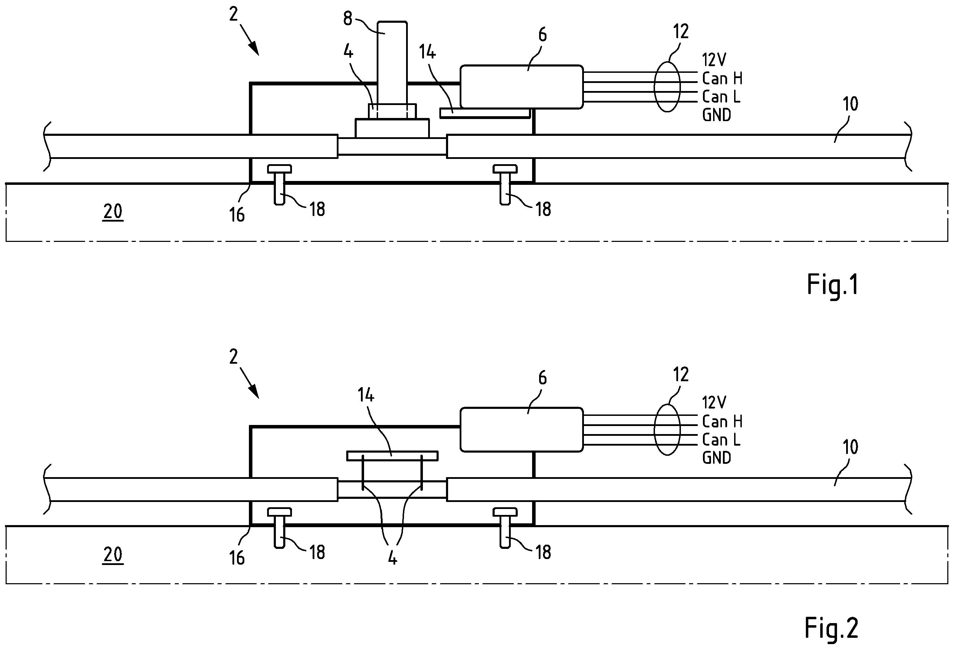

Fig.1 zeigt einen Kraftfahrzeugenergieleiteranschluss 2 umfassend ein Kontaktelement 4 sowie ein Anschlusselement 6. Das Kontaktelement 4 ist als Klemmelement gebildet, welches mit einem Bolzen 8 eines Flachleiters 10 verklemmt werden kann.

Das Anschlusselement 6 ist als Stecker oder Buchse gebildet, über den ein mehradriges Kabel eines Kommunikationsbusses 12, beispielsweise ein CAN-Bus, angeschlossen werden kann. Die Kontakte des Anschlusselements 6 sind elektrisch mit einer Kommunikationseinrichtung 14 verbunden.

Der Flachleiter 10 ist mit einer Isolierung und einer Kabelseele gebildet. Die Isolierung ist im Bereich des Bolzens 8 aufgebrochen (entfernt) und der Bolzen 8 ist aus der Isolierung herausgeführt. An den mit der Kabelseele verbundenen Bolzen 8 ist das Kontaktelement 4 angeklemmt.

Elektrisch verbunden mit dem Kontaktelement 4 ist die Kommunikationseinrichtung 14, die auf einem PCB (Printed Circuit Board) integriert sein kann. Die Kommunikationseinrichtung 14 dient zur Signal- und Protokollumsetzung zwischen dem Kommunikationsbus 12 und den Signalen, welche auf den Leitern 10 übertragen werden.

Ein Gehäuse 16 umhaust die Elemente des Kraftfahrzeugenergieleiteranschlusses 2 und ist mit Anschlusspins 18 mit einer Kraftfahrzeugkarosse 20 verbunden. Die Anschlusspins 18 bilden eine mechanische Verbindung zwischen dem Kraftfahrzeugenergieleiteranschluss 2 bzw. dessen Gehäuse 16 und der Karosse 20. Gleichzeitig kann über die Anschlusspins 18 ein Massepotenzial abgegriffen werden, welches der Kommunikationseinrichtung 14 zur Verfügung gestellt wird. Die Anschlusspins 8 sind mit der Kommunikationseinrichtung 14 leitend verbunden.

Fig. 2 zeigt ein weiteres Ausführungsbeispiel, bei dem der Flachleiter 10 in einem Anschlussbereich von der Isolation befreit ist. Dieser Anschlussbereich mittig des Flachleiters 10 und beidseitig von Isolation umgeben. In einem solchen Bereich können Kontaktpins, welche mit PCB der Kommunikationseinrichtung 14 verbunden sind als Kontaktelemente 4 leitend mit der Kabelseele des Flachleiters 10 verbunden sein. Die weiteren Elemente können entsprechend der obigen Ausführung gebildet sein.

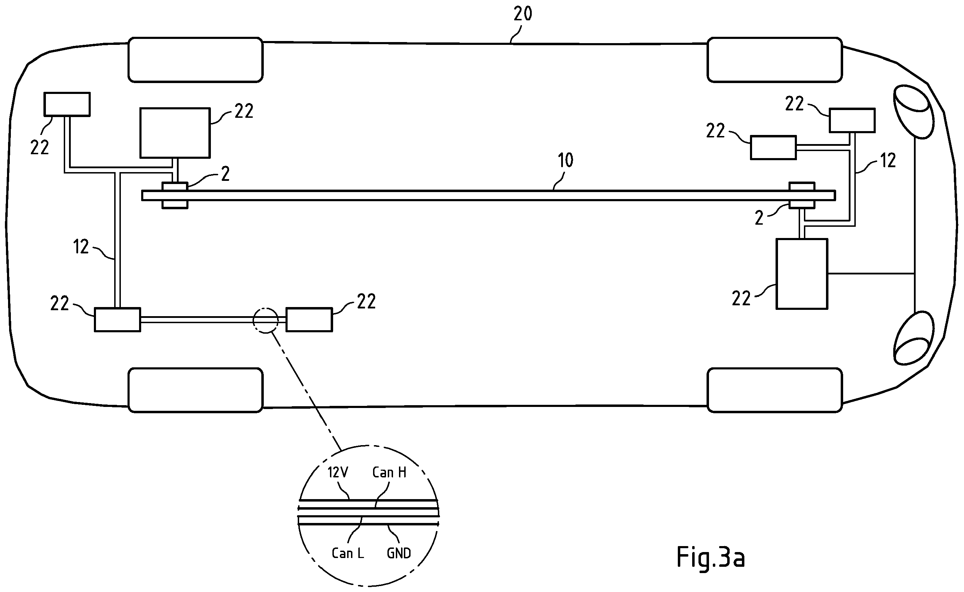

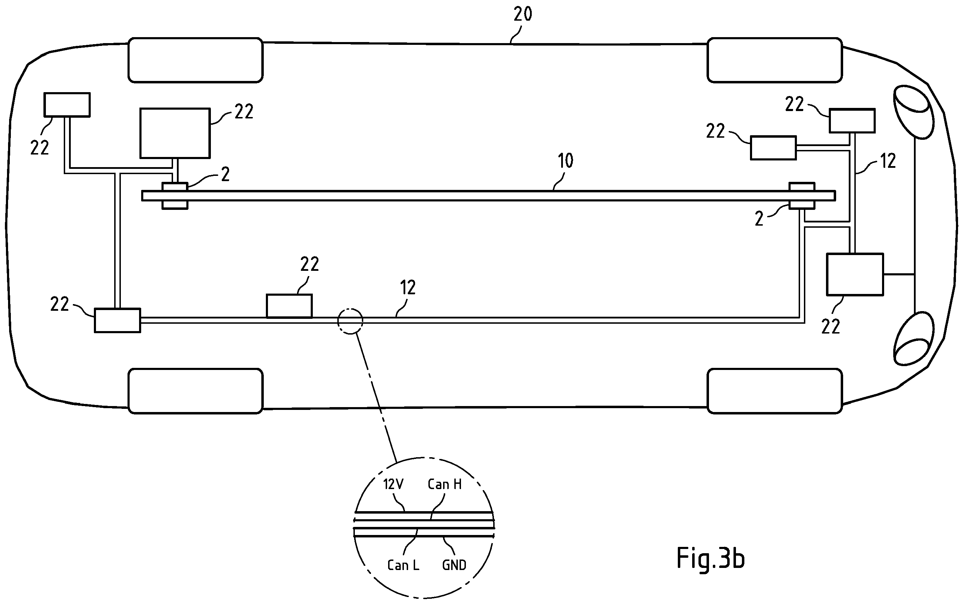

Die Fig. 3a und 3b zeigen Anschlusskonzepte für einen gegenständliche Vorrichtung. Ein als Energy-Backbone gebildeter Flachleiter 10 ist beispielsweise zwischen einer Batterie und einem Antriebsstrang angeordnet.

In einem Kraftfahrzeug 20 sind verschiedene Steuergeräte 22 räumlich verteilt angeordnet, welche untereinander über den Kommunikationsbus 12 miteinander verbunden sind. Gegenständlich wird jedoch vorgeschlagen, dass der Flachleiter 10 genutzt wird, um zwei nicht über den Kommunikationsbus 12 miteinander verbundene Bereiche miteinander zu verbinden. Hierzu wird ein erster Kraftfahrzeugenergieleiteranschluss 2 mit dem Kommunikationsbus 12 verbunden und an den Flachleiter 10 angekoppelt. An einer anderen Stelle des Flachleiters 10 ist ein weiterer Kraftfahrzeugenergieleiteranschluss 2 angekoppelt und mit dem Kommunikationsbus 12 verbunden. Über die Kraftfahrzeugenergieleiteranschlüsse 2 lassen sich Signale in den Flachleiter 10 einkoppeln und aus diesem auskoppeln. Hierüber kann eine Kommunikationsverbindung zwischen den beiden ansonsten nicht miteinander verbundenen Kommunikationsbussen 12 hergestellt werden.

Fig. 3b zeigt ein ähnliches Ausführungsbeispiel, wobei die Steuergeräte 22 allesamt über den Kommunikationsbus 12 miteinander verbunden sind und der Kommunikationsbus 12 nicht, wie in Fig. 3a, aus voneinander getrennten Bereichen gebildet ist. In einem solchen Fall kann ein Flachleiter 10 als redundante Verbindung dienen, in dem in diesen ebenfalls über die Kraftfahrzeugenergieleiteranschlüsse 2 die Signale des Kommunikationsbusses 12 ein- und ausgekoppelt werden. Somit kann eine Beschädigung an dem Kommunikationsbus 12 gegebenenfalls über den Flachleiter 10 überbrückt werden, was die Sicherheit des Fahrzeugs 20 erheblich erhöht.

### Bezugszeichenliste

- 2: Kraftfahrzeugenergieleiteranschluss
- 4: Kontaktelement
- 6: Anschlusselement
- 8: Bolzen
- 10: Flachleiter
- 12: Kommunikationsbus
- 14: Kommunikationseinrichtung
- 16: Gehäuse
- 18: Kontaktpin
- 20: Kraftfahrzeug
- 22: Steuergerät

## Patentansprüche

1. Kraftfahrzeugenergieleiteranschluss umfassend:
- ein erstes mit einem Kraftfahrzeugenergieleiter einphasig mechanisch koppelbares Kontaktelement,
- ein mit einem Kommunikationsbus koppelbares Anschlusselement und
- eine zwischen dem Anschlusselement und dem Kontaktelement angeordnete Kommunikationseinrichtung zur Übertragung von Signalen zwischen dem Kontaktelement und dem Anschlusselement.

2. Kraftfahrzeugenergieleiteranschluss nach Anspruch 1,
**dadurch gekennzeichnet,**
- **dass** die Kommunikationseinrichtung Signale in das Kontaktelement einkoppelt, insbesondere mit einem Trägersignal und einem darauf aufmodulierten Nutzsignal und/oder
- **dass** die Kommunikationseinrichtung Signale an dem Kontaktelement auskoppelt, insbesondere ein von einem Trägersignal demoduliertes Nutzsignal.

3. Kraftfahrzeugenergieleiteranschluss nach Anspruch 1 oder 2,
**dadurch gekennzeichnet,**
- **dass** die Kommunikationseinrichtung einen Anschluss für ein Massepotential aufweist und dass das Massepotential ein Referenzpotential für das Signal bildet.

4. Kraftfahrzeugenergieleiteranschluss nach einem der vorangegangenen Ansprüche,
**dadurch gekennzeichnet,**
- **dass** das Kontaktelement als Klemmanschluss mit einer zumindest in Teilen runden Öffnung für einen Anschlussbolzen gebildet ist.

5. Kraftfahrzeugenergieleiteranschluss nach einem der vorangegangenen Ansprüche,
**dadurch gekennzeichnet,**
- **dass** das Kontaktelement als Kabelklemme mit einem U-förmigen Klemmbereich für ein Flachkabel gebildet ist.

6. Kraftfahrzeugenergieleiteranschluss nach einem der vorangegangenen Ansprüche,
**dadurch gekennzeichnet,**
- **dass** die Kommunikationseinrichtung zumindest in Teilen auf einer Leiterplatte gebildet ist und dass die Leiterplatte zusammen mit dem Kontaktelement und dem Anschlusselement in einem Gehäuse eingehaust ist.

7. Kraftfahrzeugenergieleiteranschluss nach einem der vorangegangenen Ansprüche,
**dadurch gekennzeichnet,**
- **dass** an dem Gehäuse ein Befestigungsmittel für eine Kraftfahrzeugkarosse angeordnet ist und dass die Befestigungsmittel leitend mit der Kommunikationseinrichtung verbunden sind.

8. Kraftfahrzeugenergieleiter mit einem Kraftfahrzeugenergieleiteranschluss nach einem der vorangehenden Ansprüche.

9. Kraftfahrzeugenergieleiter nach Anspruch 8, bei dem
- der Kraftfahrzeugenergieleiteranschluss zwischen den distalen Enden des Kraftfahrzeugenergieleiters angeordnet ist, wobei beidseitig des Kraftfahrzeugenergieleiteranschlusses der Kraftfahrzeugenergieleiter zumindest abschnittsweise isoliert ist und im Bereich des Kraftfahrzeugenergieleiteranschluss eine Isolation aufgebrochen ist.

10. Kraftfahrzeugenergieleiter nach Anspruch 8 oder 9,
**dadurch gekennzeichnet,**
- **dass** der Kraftfahrzeugenergieleiteranschluss mit einem aus der Isolation des Kraftfahrzeugenergieleiters heraus geführten Anschlussbolzen verbunden ist.

11. Kraftfahrzeugenergieleiter nach einem der Ansprüche 8 bis 10,
**dadurch gekennzeichnet,**
- **dass** eine Isolation in einem Anschlussbereich entfernt ist und der Kraftfahrzeugenergieleiteranschluss klemmend in dem Anschlussbereich mit dem Kraftfahrzeugenergieleiter verbunden ist.
